(19) **Europäisches Patentamt**
**European Patent Office**
**Office européen des brevets**

(11) **EP 1 588 855 B1**

(12) **EUROPÄISCHE PATENTSCHRIFT**

(45) Veröffentlichungstag und Bekanntmachung des Hinweises auf die Patenterteilung:
**30.05.2007 Patentblatt 2007/22**

(51) Int Cl.:
***B41F 33/00*** *(2006.01)*   ***G01B 11/00*** *(2006.01)*

(21) Anmeldenummer: **04009331.2**

(22) Anmeldetag: **20.04.2004**

(54) **Vorrichtung zur fotoelektrischen Ausmessung einer Messvorlage und Verfahren zum Ermitteln von Koordinatenwerten einer ausgewählten Position auf einer Messvorlage mit einer solchen Messvorrichtung**

Device for photoelectric measuring of a measurement document and method for determining coordinates of a selected position on a measurement document with such a measuring device

Dispositif de mesure photoélectrique d'un document à mesurer et procédé de détermination des coordonnées d'une position sélectionnée sur un document à mesurer avec un tel dispositif de mesure

(84) Benannte Vertragsstaaten:
**CH DE FR GB IT LI**

(43) Veröffentlichungstag der Anmeldung:
**26.10.2005 Patentblatt 2005/43**

(73) Patentinhaber: **GretagMacbeth AG**
**8105 Regensdorf (CH)**

(72) Erfinder:
• **Schrämmli, Fortunat**
**5212 Hausen bei Brugg (CH)**

• **Keller, Guido**
**8105 Watt (CH)**

(74) Vertreter: **Muschke, Markus Artur Heinz**
**Patentanwälte Schwabe, Sandmair, Marx**
**Stuntzstrasse 16**
**81677 München (DE)**

(56) Entgegenhaltungen:
**DE-A- 3 232 490        DE-A- 10 053 033**
**DE-U- 9 408 442        US-A- 3 184 600**
**US-A- 5 452 078        US-A- 5 587 796**

**Beschreibung**

Die Erfindung betrifft eine Vorrichtung zur fotoelektrischen Ausmessung einer im wesentlichen ebenen Messvorlage gemäss dem Oberbegriff des unabhängigen Anspruchs.

In der grafischen Industrie müssen regelmässig sogenannte Testcharts densitometrisch oder farbmetrisch ausgemessen werden, wofür vielfach Handmessgeräte eingesetzt werden. Solche Testcharts umfassen auf einem Blatt eine mehr oder weniger grosse Anzahl von speziellen Messfeldern, auf denen das zur Ausmessung verwendete Handmessgerät mit seinem Messkopf für die Messung positioniert werden muss. Insbesondere bei Testcharts mit einer grösseren Anzahl (mehrere hundert) von Messfeldern stellt eine automatische Positionierung des Messgeräts eine erhebliche Arbeitserleichterung und Zeitersparnis dar.

Für diese automatische Positionierung sind bereits verschiedene Lösungen auf dem Markt. Eine der bekanntesten Lösungen umfasst einen X-Y-Tisch, der es gestattet, ein Handmessgerät aufzunehmen und dieses nach dem Prinzip eines Kreuztisches in zwei rechtwinkligen Koordinatenrichtungen rechnergesteuert über die Messvorlage zu fahren. Die dazu nötige Mechanik wie Motoren und Führungen beansprucht relativ viel Platz und wird daher in der Regel unter dem Vorlagentisch angeordnet. Dabei ist aber dann keine Transmissionsmessung möglich. Sollen auch Transmissionsmessungen möglich sein, so muss die Mechanik neben der Vorlagenauflage angeordnet sein, wobei aber die gesamte Messanordnung selbst bei relativ kleinen Vorlagengrössen (z.B. A4) wieder relativ gross wird.

Die Dokumente US-A-5587796, DE-A-3232490 und DE-U-9408442 beschreiben jeweils eine Vorrichtung zur fotoelektrischen Ausmessung einer im wesentlichen ebenen Messvorlage, in der die automatische Positionierung (X-Richtung, Y-Richtung) des Messgeräts durch Führungsschienen und eine Traverse erreicht wird.

Aufgabe der vorliegenden Erfindung ist es daher, eine Vorrichtung der gattungsgemässen Art dahingehend zu verbessern, dass sie insgesamt nur wenig Stellfläche benötigt und dabei gleichermassen sowohl für Remissions- als auch für Transmissionsmessungen geeignet ist. Darüberhinaus soll die Vorrichtung mechanisch möglichst einfach und entsprechend kostengünstig realisierbar sein.

Diese der Erfindung zugrundeliegende Aufgabe wird durch die durch die Merkmale des unabhängigen Anspruchs 1 gekennzeichnete erfindungsgemässe Messvorrichtung gelöst.

Besonders vorteilhafte Ausgestaltungen und Weiterbildungen der erfindungsgemässen Messvorrichtung sind Gegenstand der abhängigen Ansprüche 2-14.

Weiterhin besteht die Erfindung ebenfalls in einem Verfahren zum Ermitteln von Koordinatenwerten einer ausgewählten Position auf einer Messvorlage, die mit einer Messvorrichtung gemäss einem der Ansprüche 1-14 ausgemessen wird.

Besonders vorteilhafte Ausgestaltungen und Weiterbildungen des erfindungsgemässen Verfahrens sind Gegenstand der abhängigen Ansprüche 16 und 17.

Im folgenden wird die Erfindung anhand der Zeichnung näher erläutert. Es zeigen:

Fig. 1     einen Schrägriss eines Ausführungsbeispiels der erfindungsgemässen Messvorrichtung,

Fig. 2     einen Längsschnitt durch die Vorrichtung gemäss Fig. 1,

Fig. 3     eine Skizze zur Erläuterung der Kinematik der Roboterarme und

Fig. 4     ein Blockschema der Positionierungssteuerung der erfindungsgemässen Vorrichtung.

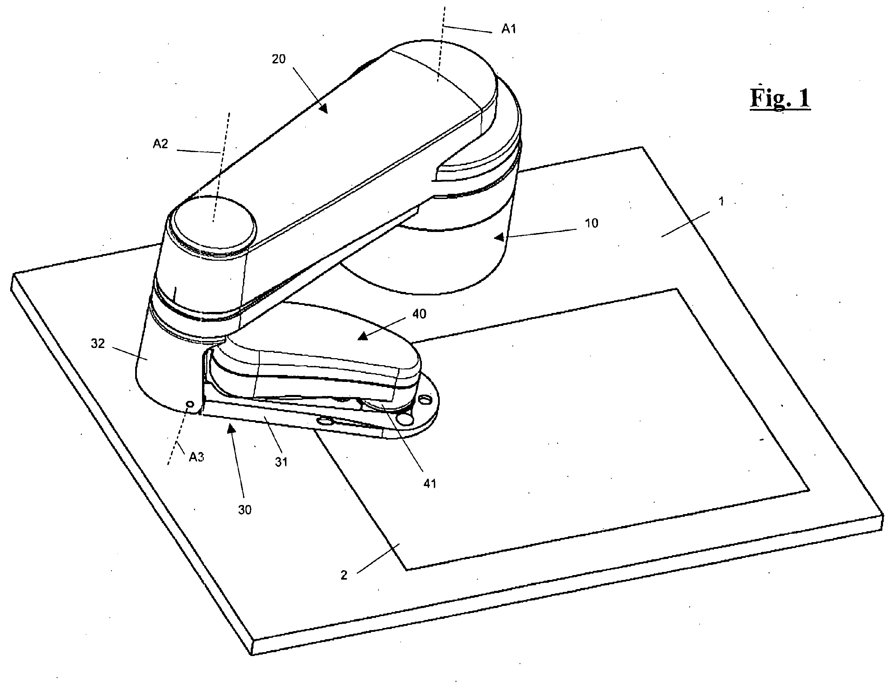

Die in Fig. 1 dargestellte Messvorrichtung ist auf einer Grundplatte 1 aufgebaut, die gleichzeitig die Auflagefläche für eine auszumessende Messvorlage 2 bildet.

Die Vorrichtung umfasst einen Sockel 10, der alle übrigen Komponenten der Vorrichtung trägt bzw. in sich birgt. Der Sockel ist auf der Grundplatte 1 mittels einer nicht dargestellten Spannvorrichtung (z.B. Spannschrauben) lösbar befestigt. Falls die Vorrichtung für Transmissionsmessungen an einem Leuchttisch verwendet werden soll, kann der Sockel 10 am Leuchttisch z.B. mittels eines doppelseitigen Klebbands befestigt werden. In diesem Fall würde die transparente Abdeckplatte des Leuchttischs als Auflagefläche für die Messvorlage dienen.

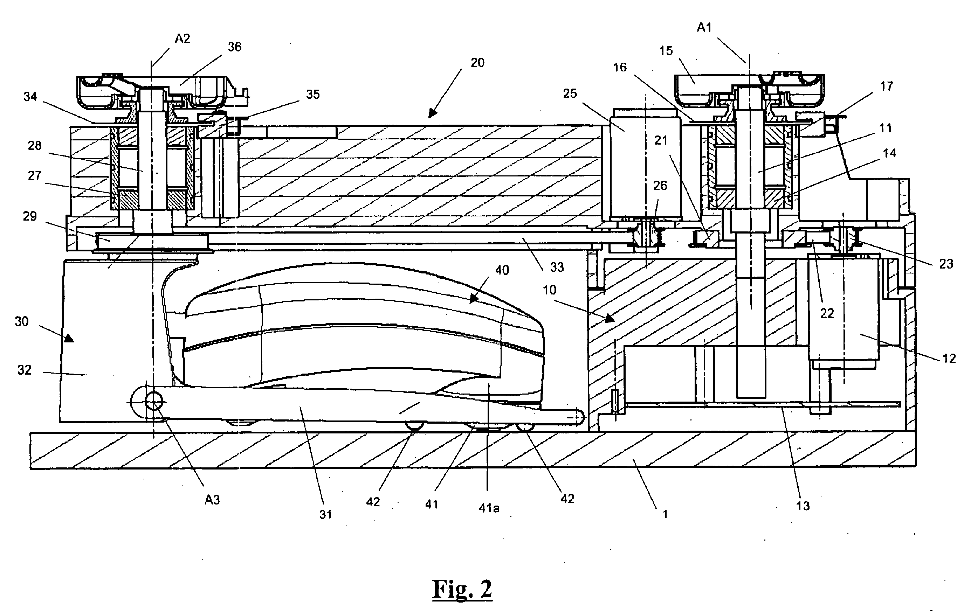

Am bezüglich der Grundplatte bzw. Auflagefläche 1 feststehenden Sockel 10 ist mit seinem einen Ende ein erster Roboterarm 20 um eine zur Grundplatte bzw. Auflagefläche 1 senkrechte erste Drehachse A1 motorisch drehbar gelagert. Am freien Ende des ersten Roboterarms 20 ist ein zweiter Roboterarm 30 um eine zur Auflagefläche 1 senkrechte zweite Drehachse A2 motorisch drehbar gelagert. Der zweite Roboterarm 30 trägt ein fotoelektrisches Handmessgerät 40, beispielsweise etwa das Handspektralphotometer EyeOne der Firma Gretag-Macbeth AG. Nicht näher dargestellte, an die äussere Form des Messgeräts 40 angepasste Positionierungsmittel sorgen dabei in an sich bekannter Weise für eine definierte Positionierung und einen sicheren Halt des Messgeräts auf dem Roboterarm 30. Das Messgerät 40 ist so ausgerichtet, dass sein Messkopf 41 in der Nähe des freien Endes des zweiten Roboterarms 30 zu liegen

**EP 1 588 855 B1**

kommt. Dort befindet sich im Roboterarm 30 auch eine passende Öffnung, durch welche der Messkopf 41 des Messgeräts 40 hindurchgreift. Die optische Achse des Messkopfs 41 ist mit 41 a bezeichnet (Fig. 2).

Wie aus der Fig. 1 unmittelbar erhellt, kann durch geeignete Verdrehung der beiden Roboterarme 20 und 30 der Messkopf 41 des Handmessgeräts 40 an jede beliebige Stelle der Messvorlage 2 gefahren werden, wobei der überstreichbare Arbeitsbereich natürlich durch die Abmessungen der beiden Roboterarme 20 und 30 und deren mögliche Winkelstellungen limitiert ist. Der Sockel 10 bildet zusammen mit den beiden Roboterarmen 20 und 30 einen Zweiachsen-Roboter, wie er grundsätzlich beispielsweise unter der Bezeichnung SCARA-Roboter ("Selective Compliant Assembly Robot Arm") allgemein bekannt ist.

Zur Verstellung der Höhe des Messgeräts 40 über der Grundplatte 1 können nicht dargestellte Abstandsscheiben vorgesehen sein, welche zwischen den Sockel 10 und die Grundplatte 1 eingefügt werden. Dadurch kann die Vorrichtung für die Messung von praktisch beliebig dicken ("hohen") Messvorlagen adaptiert werden.

Gemäss einer bevorzugten Ausführungsform ist der zweite Roboterarm 30 mit einer Wippe 31 ausgestattet, welche um eine zur Grundplatte bzw. Auflagefläche 1 im wesentlichen parallele Schwenkachse A3 am hinteren (drehgelagerten) Teil 32 des Roboterarms 30 angelenkt ist und eine (beschränkte) Bewegung des Messgeräts 40 bzw. dessen Messkopfs 41 senkrecht zur Auflagefläche 1 bzw. Messvorlage 2 ermöglicht. Dadurch kann der Abstand zwischen Messkopf 41 und Auflagefläche 1 bzw. darauf befindlicher Messvorlage 2 konstant gehalten werden, auch wenn die Auflagefläche 1 oder die Messvorlage 2 nicht ganz planar ist oder Abstand für dickere Messvorlagen ausgeglichen werden muss. Die Kippbewegung der Wippe 31 ist nach unten auf etwa max. 1 mm begrenzt. Dadurch ist auch bei sehr dicken Messvorlagen eine sanfte Auffahrt des Messgeräts 40 auf deren Kanten gewährleistet.

Gemäss einem weiteren wichtigen Aspekt der Erfindung ist der zweite Roboterarm 30 bzw. dessen das Messgerät 40 tragende Wippe 31 mit weiteren Öffnungen (nicht dargestellt) ausgestattet, durch welche am Handmessgerät 40 vorhandene Gleitfüsse oder Gleitrollen oder -kugeln 42 (Fig. 2) hindurchgreifen, so dass sich das Messgerät 40 damit auf der Messvorlage 2 abstützen kann. Auf diese Weise wird nicht nur der korrekte Abstand des Messkopfs 41 zur Messvorlage sichergestellt, sondern es erfolgt auch eine Gewichtsentlastung der beiden Roboterarme 20 und 30, was wiederum eine weniger aufwändige mechanische Konstruktion ermöglicht. Prinzipiell ist aber die Vorrichtung bzw. die Roboterarme in sich selbsttragend ausgelegt, und die Abstützung des Messgeräts 40 auf der Messvorlage 2 dient in erster Linie nur der Konstanthaltung des Messabstands.

Die Fig. 2 zeigt anhand eines Längsschnitts durch den Sockel 10 und den ersten Roboterarm 20 diverse Konstruktionsdetails der Messvorrichtung.

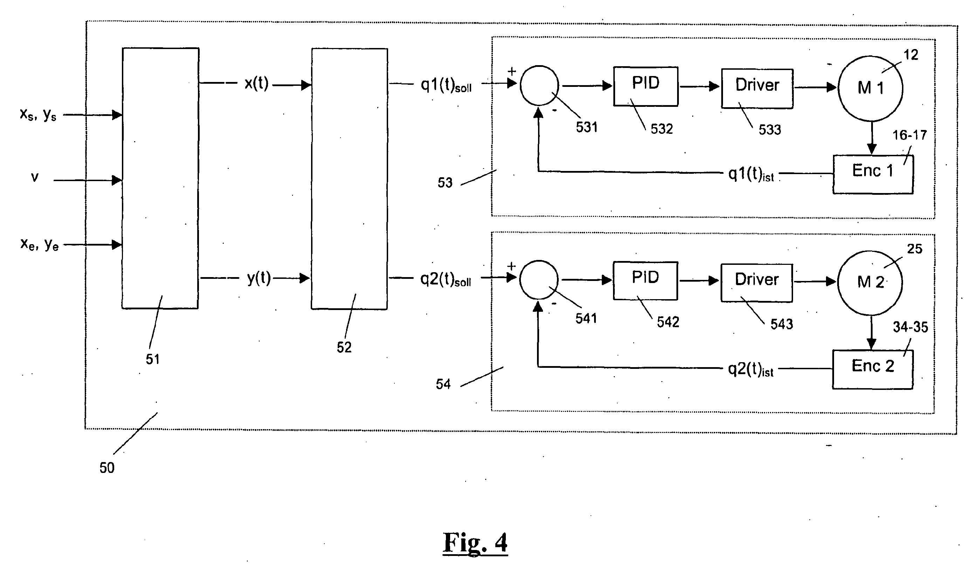

Im Sockel 10 ist koaxial zu diesem eine feststehende Hohlwelle 11 sowie ein erster Gleichstrommotor 12 montiert. Ausserdem ist im Inneren des Sockels 10 eine Platine 13 untergebracht, die die elektronischen Komponenten für eine noch näher zu beschreibende Positionierungssteuerung 50 (Fig. 4) trägt.

Auf der Hohlwelle 11 ist mittels eines Kugellagers 14 der erste Roboterarm 20 drehbar gelagert. Drehfest mit dem ersten Roboterarm 20 ist ein Zahnkranz 21 verbunden, der über einen Zahnriemen 22 mit einem Ritzel 23 des Gleichstrommotors 12 gekoppelt ist und von diesem angetrieben wird. Oben auf der Hohlwelle 11 sitzt eine Schale 15 zur Aufnahme elektrischer Verbindungsleitungen.

Über dem Kugellager 14 ist fest auf der Hohlwelle 11 eine erste Kodierscheibe 16 montiert, die an ihrem Rand von einem ersten fotoelektrischen Inkremental-Kodierer 17 umgriffen wird. Dieser Inkremental-Kodierer 17 ist mit dem ersten Roboterarm 20 verbunden und bewegt sich bei der Drehung des letzteren längs des Umfangs der Kodierscheibe 16 und tastet dabei die auf dieser befindlichen Kodiermuster ab. Die erste Kodierscheibe 16 und der erste Inkremental-Kodierer 17 bilden zusammen einen ersten Winkel-Kodierer, der es in an sich bekannter Weise gestattet, die Winkelstellungen des ersten Roboterarms 20 relativ zum Sockel 10 zu erfassen und der Positionierungssteuerung 50 zuzuführen.

Im ersten Roboterarm 20 ist in der Nähe seines gelagerten Endes ein zweiter Gleichstrommotor 25 mit einem Zahnritzel 26 fest angeordnet. Am freien Ende des ersten Roboterarms 20 ist ein weiteres Kugellager 27 eingelassen, welches eine weitere Hohlwelle 28 drehbar lagert. An dieser Hohlwelle 28 ist der hintere Teil 32 des zweiten Roboterarms 30 und damit dieser selbst aufgehängt. Mit der Hohlwelle 28 ist ein Zahnkranz 29 drehfest verbunden, der über einen Zahnriemen 33 mit dem Ritzel 26 des zweiten Gleichstrommotors 25 gekoppelt ist und von diesem angetrieben wird.

Im oberen Bereich der Hohlwelle 28 ist eine zweite Kodierscheibe 34 drehfest mit dieser verbunden. Diese wird an ihrem Umfang von einem zweiten Inkremental-Kodierer 35 umgriffen und abgetastet. Letzterer ist fest im ersten Roboterarm 20 angeordnet. Die zweite Kodierscheibe 34 und der zweite Inkremental-Kodierer 35 bilden zusammen einen zweiten Winkel-Kodierer, der es in an sich bekannter Weise gestattet, die Winkelstellungen des zweiten Roboterarms 30 relativ zum ersten Roboterarm 20 zu erfassen und der Positionierungssteuerung 50 zuzuführen. Oben auf der Hohlwelle sitzt eine weitere Schale 36 zur Aufnahme elektrischer Verbindungsleitungen.

Im hinteren Teil 32 des zweiten Roboterarms 30 befindet sich ein elektrischer Steckanschluss, der in einen am Handmessgerät 40 vorhandenen Steckanschluss für die Fernsteuerung des Messgeräts durch einen externen Rechner eingreift. Von diesem Steckanschluss im zweiten Roboterarm 30 führt ein Kabel durch die Hohlwelle 28, spiralförmig durch die Schalen 36 und 15 und schliesslich durch die Hohlwelle 11 in den Sockel 10 und von dort zu einem dort

3

vorgesehenen Steckanschluss für einen externen Rechner.

Die elektrischen Verbindungsleitungen vom zweiten Inkremental-Kodierer 35, vom zweiten Gleichstrommotor 25 und vom ersten Inkremental-Kodierer 17 zur auf der Platine 13 befindlichen Positionierungssteuerung sind ebenfalls durch die Hohlwelle 11 in den Sockel 10 geführt.

Die beiden Kodierscheiben 16 und 34 sind vorzugsweise als Film ausgebildet und sind mit einem solchen Kodiermuster versehen, dass sich eine Auflösung von ca. 8000 Inkrementen entsprechend einer Winkelauflösung von rund 0.05° ergibt. Als Inkremental-Kodierer kann z.B. das Element HEDS-9000U von Agilent Technologies verwendet werden. Die erfindungsgemässe Integration der beiden Winkelkodierer 16-17 und 34-35 in die Lagerung der relativ zu einander verdrehbaren Teile ist konstruktiv besonders einfach und kostengünstig realisierbar.

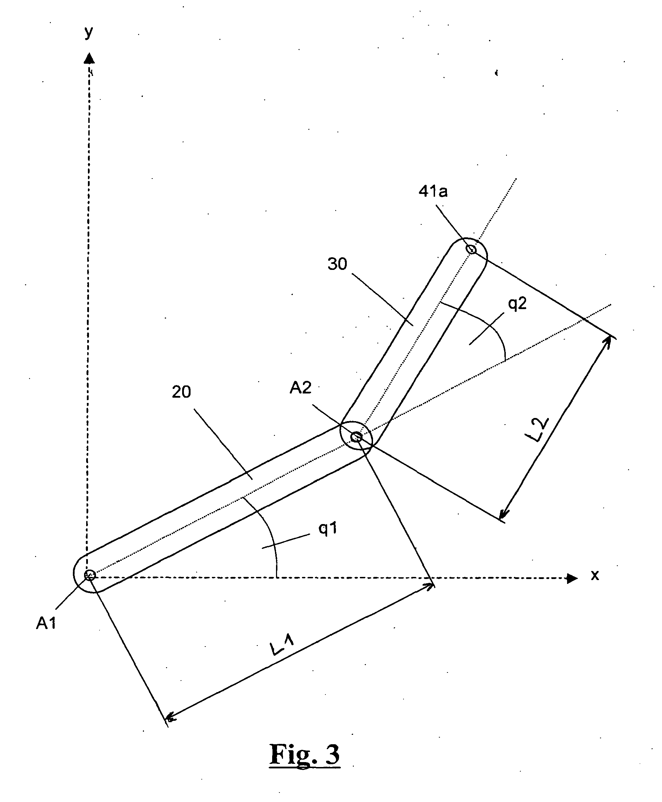

In Fig. 3 sind die kinematischen Zusammenhänge der Messvorrichtung illustriert.

Darin sind x und y die Achsen eines kartesischen Koordinatensystems, dessen Ursprung in der ersten Drehachse A1 des ersten Roboterarms 20 liege. Der Winkel q1 bezeichnet die Winkellage des ersten Roboterarms 20 relativ zur x-Achse. Der Winkel q2 bezeichnet die Winkellage des zweiten Roboterarms 30 relativ zum ersten Roboterarm 20. Wenn L1 die durch den Abstand erste Drehachse A1 - zweite Drehachse A2 definierte relevante Länge des ersten Roboterarms 20 und L2 die durch den Abstand zweite Drehachse A2 - optische Achse 41 a des Messkopfs 41 definierte relevante Länge des zweiten Roboterarms 30 ist, dann ergeben sich zwischen den kartesischen Koordinaten x und y der optischen Achse 41 a und den Winkeln q 1 und q2 offensichtlich folgende Zusammenhänge:

$$x = L1*\cos(q1) + L2*\cos(q1+q2) \qquad y = L1*\sin(q1) + L2*\sin(q1+q2) \qquad [1]$$

In der Fig. 4 ist die schon erwähnte Positionierungssteuerung 50 blockschematisch dargestellt. Sie umfasst im wesentlichen eine Bahngeneratorstufe 51, eine Kinematikstufe 52 und zwei Regelkreise 53 und 54. Die beiden Regelkreise umfassen je einen Winkelvergleicher 531 bzw. 541, einen Proportional-Integral-Differential-Regler 532 bzw. 542 und einen Motor-Treiber 533 bzw. 543 und schliessen ausserdem je einen der beiden Gleichstrommotoren 12 bzw. 25 sowie je einen der beiden Winkelkodierer 16-17 bzw. 34-35 ein.

Als erstes wird die Grösse und Orientierung der auf der Grundplatte 1 befindlichen Messvorlage 2 ermittelt. Dazu wird ein sichtbarer Referenzpunkt (z.B. ein Visier) am freien Ende des zweiten Roboterarms 30 von Hand oder elektronisch gesteuert zu drei Eckpunkten der Messvorlage 2 bewegt. Der Referenzpunkt hat dabei einen definierten Abstand von der optischen Achse 41 a des Messkopfs 41 des Messgeräts 40. Aus den Winkellagen q1 und q2 in diesen drei Eckpunkten werden in Verbindung mit dem definierten Abstand Referenzpunkt - optische Achse (in einem externen Rechner) die entsprechenden, sich auf den Messkopf bzw. dessen optische Achse beziehenden x-y-Koordinaten berechnet und gespeichert. Aus den x-y-Koordinaten der 3 Eckpunkte ist die Grösse und Orientierung der Messvorlage 2 unmittelbar berechenbar. Das elektronisch gesteuerte Bewegen des Referenzpunkts zu den 3 Eckpunkten der Messvorlage kann z.B. so realisiert sein, dass von einem externen Rechner durch Drücken geeigneter Tasten an die Positionierungssteuerung 50 Befehle zur Bewegung des Messkopfs in x- oder y-Richtung gegeben werden. Das alternative Bewegen von Hand ist ebenfalls leicht zu bewerkstelligen, weil die Lager der beiden Roboterarme bei stromlosen Antriebsmotoren nur ein sehr kleines Reibungsmoment aufweisen.

Wenn sich der Referenzpunkt in der gewünschten Position auf einem Eckpunkt befindet, können durch Betätigen einer geeigneten Taste am externen Rechner die zugehörigen Winkellagen in den Rechner übernommen und in entsprechende absolute x-y-Koordinaten umgerechnet werden. Diese x-y-Koordinaten beziehen sich, wie schon gesagt, auf die optische Achse des Messkopfs.

Im externen Rechner sind wie bei den bekannten X/Y-Tisch-Lösungen für viele marktgängige Messvorlagen (Testcharts) die geometrischen Daten (Abmessungen) und die (Relativ-)Koordinaten der vorhandenen Messfelder sowie Angaben zu deren Aufbau gespeichert. Wenn, wie vorstehend beschrieben, die absoluten x-y-Koordinaten der Eckpunkte der konkreten Messvorlage bekannt sind, dann können mit Hilfe dieser Eckpunktekoordinaten die zur konkreten Messvorlage gespeicherten Relativ-Koordinaten in Absolut-Koordinaten umgerechnet werden. Diese werden dann als Positionierungsbefehle für die Ansteuerung der Messvorrichtung verwendet.

Nach diesen vorbereitenden Schritten ist die Vorrichtung für die automatisierte Ausmessung der Messvorlage bereit.

Von einem externen Rechner werden der Bahngeneratorstufe 51 über einen nicht dargestellten Anschluss Positionierungsbefehle zugeführt. Diese Positionierungsbefehle stellen die (absoluten) kartesischen Koordinatenwerte $x_s$, $y_s$ eines Startpunkts (auf der Messvorlage), die kartesischen Koordinatenwerte $x_e$, $y_e$ eines Endpunkts und einen Geschwindigkeitswert v dar. Aus diesen Positionierungsbefehlen erzeugt nun die Bahngeneratorstufe 51 eine zeitliche Abfolge von kartesischen Koordinatenwerten x(t) und y(t), die eine lineare Bewegungsbahn des Messgeräts 40 (präziser der optischen Achse 41 a dessen Messkopfs 41) zwischen dem Startpunkt und dem Endpunkt (auf der Messvorlage) repräsentieren.

Die Kinematikstufe 52 berechnet aus diesen Koordinatenwerten x(t) und y(t) eine entsprechende zeitliche Abfolge von Soll-Winkellagen $q1(t)_{soll}$ und $q2(t)_{soll}$ für die beiden Roboterarme 20 und 30. Diese Berechnung erfolgt ganz einfach durch Auflösung der beiden vorstehenden Gleichungen [1] nach q1 und q2.

Die beiden Regelkreise 53 und 54 steuern schliesslich die beiden Gleichstrommotoren 12 und 25 so an, dass die von den Winkelkodierern 16-17 bzw. 34-35 erfassten Ist-Winkellagen $q1(t)_{ist}$ und $q2(t)_{ist}$ mit den vorgegebenen Soll-Winkellagen $q1(t)_{soll}$ und $q2(t)_{soll}$ übereinstimmen und der Messkopf 41 des Messgeräts 40 damit mit der befohlenen Geschwindigkeit vom befohlenen Startpunkt zum befohlenen Endpunkt über die Messvorlage bewegt wird. Während der Bewegung des Messkopfs 40 wird die Messvorlage in an sich bekannter Weise ausgemessen, und die Messwerte werden an den angeschlossenen externen Rechner übertragen.

Um die Vorrichtung für verschiedene Messanwendungen einsetzen zu können, kann die Grundplatte auf einer Seite weiss und auf der anderen Seite schwarz ausgebildet sein. Die Vorrichtung wird dann je nach Bedarf auf der einen oder der anderen Seite der Grundplatte montiert.

Für die Kalibrierung des Messgeräts 40 wird üblicherweise eine (körperliche) Weissreferenz benötigt. Diese kann z.B. am Sockel 10 angebracht sein, wobei sie natürlich vom Messkopf des Messgeräts erreichbar sein muss. Die Weissreferenz kann aber z.B. auch in der Wippe 31 untergebracht und dort z.B. mittels eines Stifts mechanisch in den Messstrahlengang des Messgeräts 40 einbringbar sein.

**Patentansprüche**

1. Vorrichtung zur fotoelektrischen Ausmessung einer im wesentlichen ebenen Messvorlage, mit einem fotoelektrischen Messgerät (40) und einer Positionierungseinrichtung (10-50), um das Messgerät (40) zweidimensional über die auf einer Auflagefläche (1) angeordnete Messvorlage (2) zu führen und an definierten Messstellen der Messvorlage zu positionieren, **dadurch gekennzeichnet, dass** die Positionierungseinrichtung als Zweiachsen-Roboter ausgebildet ist, welcher einen feststehenden Sockel (10), einen ersten und einen zweiten beweglichen Roboterarm (20 bzw. 30) und eine Positionierungssteuerung (50) umfasst, wobei der erste Roboterarm (20) auf dem feststehenden Sockel (10) um eine zur Auflagefläche (1) senkrechte erste Drehachse (A1) motorisch drehbar angeordnet ist, wobei der zweite Roboterarm (30) am freien Ende des ersten Roboterarms (20) um eine zur Auflagefläche (1) senkrechte zweite Drehachse (A2) motorisch drehbar angeordnet ist und das Messgerät (40) trägt und wobei die Positionierungssteuerung (50) zur Verdrehung der beiden Roboterarme (20,30) nach Massgabe von extern zugeführten Positionierungsbefehlen ausgebildet ist.

2. Vorrichtung nach Anspruch 1, **dadurch gekennzeichnet, dass** der zweite Roboterarm (30) eine Wippe (31) umfasst, auf der das Messgerät (40) gehaltert ist und die eine begrenzte Bewegung des Messgeräts (40) senkrecht zur Auflagefläche (1) ermöglicht.

3. Vorrichtung nach Anspruch 1 oder 2, **dadurch gekennzeichnet, dass** die beiden Roboterarme (20,30) mittels je eines Gleichstrommotors (12,25) angetrieben sind und zur Erfassung der Winkellagen (q 1,q2) der beiden Roboterarme (20,30) ein erster und ein zweiter Winkelkodierer (16-17 bzw. 34-35) vorgesehen sind, welche je aus einer Kodierscheibe (16 bzw. 34) und einem mit dieser zusammenarbeitenden optischen Inkremental-Kodierer (17 bzw. 35) bestehen.

4. Vorrichtung nach Anspruch 3, **dadurch gekennzeichnet, dass** die Kodierscheibe (16) des ersten Winkelkodierers (16-17) koaxial zur ersten Drehachse (A1) feststehend angeordnet ist und der mit ihr zusammenarbeitende Inkremental-Kodierer (17) drehfest mit dem ersten Roboterarm (20) verbunden ist.

5. Vorrichtung nach Anspruch 3, **dadurch gekennzeichnet, dass** die Kodierscheibe (34) des zweiten Winkelkodierers (34-35) drehfest mit dem zweiten Roboterarm (30) verbunden ist und der mit ihr zusammenarbeitende Inkremental-Kodierer (35) ortsfest auf dem ersten Roboterarm (20) angeordnet ist.

6. Vorrichtung nach einem der Ansprüche 3-5, **dadurch gekennzeichnet, dass** die Positionierungssteuerung (50) eine Kinematikstufe (52) und zwei Regelkreise (53,54) enthält, welche Kinematikstufe (52) ihr zugeführte kartesische Soll-Koordinatenwerte (x(t), y(t)) in entsprechende Soll-Winkellagen ($q1(t)_{soll}$, $q2(t)_{soll}$) für die beiden Roboterarme (20,30) umrechnet, und welche Regelkreise (53,54) je einen der beiden Gleichstrommotoren (12,25) und je einen der beiden Winkelkodierer (16-17, 34-35) einschliessen und die beiden Roboterarme (20,30) in die Soll-Winkellagen bewegen.

**7.** Vorrichtung nach Anspruch 6, **dadurch gekennzeichnet, dass** die Positionierungssteuerung (50) eine Bahngeneratorstufe (51) enthält, welche aus ihr extern zugeführten kartesischen Anfangs- und Endkoordinatenwerten ($x_s$, $y_s$,$x_e$,$y_e$) sowie aus einem extern zugeführten Geschwindigkeitswert (v) eine eine lineare Bewegungsbahn definierende zeitliche Abfolge von kartesischen Koordinatenwerten (x(t), y(t)) erzeugt und diese der Kinematikstufe (52) als Soll-Koordinatenwerte zuführt.

**8.** Vorrichtung nach einem der vorangehenden Ansprüche, **dadurch gekennzeichnet, dass** die beiden Roboterarme (20,30) auf Hohlwellen (11,28) gelagert sind, die gleichzeitig als Durchführungen für elektrische Verbindungsleitungen dienen.

**9.** Vorrichtung nach einem der vorangehenden Ansprüche, **dadurch gekennzeichnet, dass** der Sockel (10) mittels Abstandsscheiben bezüglich einer Auflagefläche (1) höhenverstellbar ist.

**10.** Vorrichtung nach einem der vorangehenden Ansprüche, **dadurch gekennzeichnet, dass** die beiden Roboterarme (20, 30) in sich selbsttragend ausgebildet sind.

**11.** Vorrichtung nach einem der vorangehenden Ansprüche, **dadurch gekennzeichnet, dass** sie eine Grundplatte (1) aufweist, an der der Sockel (10) lösbar befestigt ist.

**12.** Vorrichtung nach Anspruch 11, **dadurch gekennzeichnet, dass** der Sockel (10) wahlweise an der einen oder der anderen Seite der Grundplatte (1) befestigbar ist.

**13.** Vorrichtung nach Anspruch 11 oder 12, **dadurch gekennzeichnet, dass** eine Seite der Grundplatte (1) im wesentlichen weiss und die andere Seite im wesentlichen schwarz ausgebildet ist.

**14.** Vorrichtung nach einem der vorangehenden Ansprüche, **dadurch gekennzeichnet, dass** sie eine körperliche Weissreferenz aufweist, die am Sockel (10) oder an der Wippe (31) angeordnet ist.

**15.** Verfahren zum Ermitteln von Koordinatenwerten einer ausgewählten Position auf einer Messvorlage, die mit einer Messvorrichtung gemäss einem der vorangehenden Ansprüche ausgemessen wird, **dadurch gekennzeichnet, dass** ein Referenzpunkt auf dem zweiten Roboterarm (30) an die ausgewählte Position auf der Messvorlage (2) bewegt wird, dass die zugehörigen Winkellagen (q1,q2) der beiden Roboterarme (20,30) erfasst werden, und dass aus den Winkellagen die absoluten kartesischen Koordinaten des Referenzpunkts berechnet werden.

**16.** Verfahren nach Anspruch 15, **dadurch gekennzeichnet, dass** für die Bewegung des Referenzpunkts die beiden Roboterarme (20,30) bei stromlosen Antriebsmotoren (12,25) von Hand bewegt werden.

**17.** Verfahren nach Anspruch 15, **dadurch gekennzeichnet, dass** für die Bewegung des Referenzpunkts die beiden Roboterarme (20,30) manuell gesteuert motorisch bewegt werden.

**Claims**

**1.** Apparatus for the photoelectric measurement of an essentially planar measurement template, comprising a photoelectric measuring device (40) and a positioning device (10-50) for guiding the measuring device (40) in a two-dimensional manner over the measurement template (2) arranged on a support surface (1) and for positioning it at defined measurement locations of the measurement template, **characterised in that** the positioning device is designed as a two-axis robot which comprises a stationary base (10), a first and a second movable robot arm (20 and 30) and a positioning controller (50), wherein the first robot arm (20) is arranged on the stationary base (10) such that it can be rotated in a motor-driven manner about a first axis of rotation (A1) perpendicular to the support surface (1), wherein the second robot arm (30) is arranged at the free end of the first robot arm (20) such that it can be rotated in a motor-driven manner about a second axis of rotation (A2) perpendicular to the support surface (1) and carries the measuring device (40), and wherein the positioning controller (50) is designed to rotate the two robot arms (20, 30) according to externally supplied positioning commands.

**2.** Apparatus according to Claim 1, **characterised in that** the second robot arm (30) comprises a rocker (31) on which the measuring device (40) is secured and which allows a limited movement of the measuring device (40) perpendicular to the support surface (1).

3.  Apparatus according to Claim 1 or 2, **characterised in that** the two robot arms (20, 30) are driven by a respective DC motor (12, 25) and a first and a second angle encoder (16-17 and 34-35) are provided for detecting the angular positions (q1, q2) of the two robot arms (20, 30), said first and second angle encoders each consisting of a coding disc (16 and 34) and an optical incremental encoder (17 and 35) which cooperates therewith.

4.  Apparatus according to Claim 3, **characterised in that** the coding disc (16) of the first angle encoder (16-17) is arranged in a stationary manner coaxially to the first axis of rotation (A1), and the incremental encoder (17) which cooperates therewith is non-rotatably connected to the first robot arm (20).

5.  Apparatus according to Claim 3, **characterised in that** the coding disc (34) of the second angle encoder (34-35) is non-rotatably connected to the second robot arm (30), and the incremental encoder (35) which cooperates therewith is arranged in a stationary manner on the first robot arm (20).

6.  Apparatus according to one of Claims 3 to 5, **characterised in that** the positioning controller (50) contains a kinematics stage (52) and two control circuits (53, 54), which kinematics stage (52) converts Cartesian nominal coordinate values (x(t), y(t)) supplied thereto into corresponding nominal angular positions ($q1(t)_{soll}$, $q2(t)_{soll}$) for the two robot arms (20, 30), and which control circuits (53, 54) in each case include one of the two DC motors (12, 25) and one of the two angle encoders (16-17, 34-35) and move the two robot arms (20, 30) into the nominal angular positions.

7.  Apparatus according to Claim 6, **characterised in that** the positioning controller (50) contains a path generator stage (51) which generates, from externally supplied Cartesian start and end coordinate values ($x_s$, $y_s$, $x_e$, $y_e$) and from an externally supplied speed value (v), a temporal sequence of Cartesian coordinate values (x(t), y(t)) which define a linear movement path, and supplies these to the kinematics stage (52) as nominal coordinate values.

8.  Apparatus according to one of the preceding claims, **characterised in that** the two robot arms (20, 30) are mounted on hollow shafts (11, 28) which simultaneously serve as passages for electrical connecting lines.

9.  Apparatus according to one of the preceding claims, **characterised in that** the base (10) is height-adjustable with respect to a support surface (1) by means of spacer discs.

10. Apparatus according to one of the preceding claims, **characterised in that** the two robot arms (20, 30) are designed to be self-supporting.

11. Apparatus according to one of the preceding claims, **characterised in that** it comprises a base plate (1) to which the base (10) is releasably fixed.

12. Apparatus according to Claim 11, **characterised in that** the base (10) can be fixed selectively to one or the other side of the base plate (1).

13. Apparatus according to Claim 11 or 12, **characterised in that** one side of the base plate (1) is designed to be essentially white and the other side is designed to be essentially black.

14. Apparatus according to one of the preceding claims, **characterised in that** it comprises a physical white reference which is arranged on the base (10) or on the rocker (31).

15. Method for determining coordinate values of a selected position on a measurement template, which is measured with a measurement apparatus according to one of the preceding claims, **characterised in that** a reference point on the second robot arm (30) is moved to the selected position on the measurement template (2), **in that** the associated angular positions (q1, q2) of the two robot arms (20, 30) are detected, and **in that** the absolute Cartesian coordinates of the reference point are calculated from the angular positions.

16. Method according to Claim 15, **characterised in that**, for the movement of the reference point, the two robot arms (20, 30) are moved manually while no power is supplied to the drive motors (12, 25).

17. Method according to Claim 15, **characterised in that**, for the movement of the reference point, the two robot arms (20, 30) are moved in a motor-driven manner under manual control.

**Revendications**

1.  Dispositif de mesure photoélectrique d'un modèle de mesure sensiblement plan, avec un appareil de mesure photoélectrique (40) et un système de positionnement (10 à 50) pour guider l'appareil de mesure (40) dans deux dimensions au-dessus du modèle de mesure (2) disposé sur une surface d'appui (1) et le positionner en des points de mesure définis du modèle de mesure, **caractérisé en ce que** le système de positionnement est réalisé sous la forme d'un robot biaxe qui comprend un socle fixe (10), un premier et un deuxième bras de robot mobile (20 ou 30) et une commande de positionnement (50), le premier bras de robot (20) étant disposé sur le socle fixe (10) de façon à pouvoir être entraîné en rotation par un moteur autour d'un premier axe de rotation (A1) perpendiculaire à la surface d'appui (1), le deuxième bras de robot (30) étant disposé à l'extrémité libre du premier bras de robot (20) de façon à pouvoir être entraîné en rotation par un moteur autour d'un deuxième axe de rotation (A2) perpendiculaire à la surface d'appui (1) et portant l'appareil de mesure (40), et la commande de positionnement (50) étant configurée de façon à faire tourner les deux bras de robot (20, 30) en fonction de commandes de positionnement fournies de l'extérieur.

2.  Dispositif selon la revendication 1, **caractérisé en ce que** le deuxième bras de robot (30) comprend une bascule (31) qui est fixée à l'appareil de mesure (40) et qui permet un mouvement limité de l'appareil de mesure (40) perpendiculairement à la surface d'appui (1).

3.  Dispositif selon la revendication 1 ou la revendication 2, **caractérisé en ce que** les deux bras de robot (20, 30) sont entraînés chacun par un moteur à courant continu (12, 25) et **en ce que**, pour détecter les positions angulaires (q1, q2) des deux bras de robot (20, 30), il est prévu un premier et un deuxième codeur angulaire (16-17 ou 34-35) qui se composent chacun d'un disque codeur (16 ou 34) et d'un codeur incrémental optique (17 ou 35) qui coopère avec ce dernier.

4.  Dispositif selon la revendication 3, **caractérisé en ce que** le disque codeur (16) du premier codeur angulaire (16-17) est disposé de manière fixe et coaxiale par rapport au premier axe de rotation (A1) et **en ce que** le codeur incrémentiel (17) qui coopère avec lui est relié de manière solidaire en rotation au premier bras de robot (20).

5.  Dispositif selon la revendication 3, **caractérisé en ce que** le disque codeur (34) du deuxième codeur angulaire (34-35) est relié de manière solidaire en rotation au deuxième bras de robot (30) et **en ce que** le codeur incrémentiel (35) qui coopère avec lui est fixé en un point du premier bras de robot (20).

6.  Dispositif selon l'une des revendications 3 à 5, **caractérisé en ce que** la commande de positionnement (50) contient un étage cinématique (52) et deux boucles de régulation (53, 54), dans lequel l'étage cinématique (52) convertit les valeurs des coordonnées cartésiennes théoriques (x(t), y(t)) qui lui sont fournies en positions angulaires théoriques correspondantes (q1 (t)$_{théor}$, q2(t)$_{théor}$) pour les deux bras de robot (20, 30), et dans lequel les boucles de régulation (53, 54) incorporent chacune l'un des deux moteurs à courant continu (12, 25) et l'un des deux codeurs angulaires (16-17, 34-35) et déplacent les deux bras de robot (20, 30) dans les positions angulaires théoriques.

7.  Dispositif selon la revendication 6, **caractérisé en ce que** la commande de positionnement (50) contient un étage générateur de trajectoire (51) qui, à partir des valeurs de coordonnées cartésiennes de début et de fin (x$_s$, y$_s$, x$_e$, y$_e$) qui lui sont fournies de l'extérieur ainsi qu'à partir d'une valeur de vitesse (v) qui lui est fournie de l'extérieur, génère une suite temporelle de valeurs de coordonnées cartésiennes (x(t), y(t)) définissant une trajectoire de déplacement linéaire et les délivre en tant que valeurs de coordonnées théoriques à l'étage cinématique (52).

8.  Dispositif selon l'une des revendications précédentes, **caractérisé en ce que** les deux bras de robot (20, 30) sont supportés sur des arbres creux (11, 28) qui servent en même temps de guides pour les fils de connexion électrique.

9.  Dispositif selon l'une des revendications précédentes, **caractérisé en ce que** le socle (10) est réglable en hauteur au moyen de rondelles entretoises par rapport à une surface d'appui (1).

10. Dispositif selon l'une des revendications précédentes, **caractérisé en ce que** les deux bras de robot (20, 30) sont réalisés sous une forme en autoporteuse.

11. Dispositif selon l'une des revendications précédentes, **caractérisé en ce qu'**il présente une plaque de base (1) qui est fixée de manière démontable au socle (10).

**12.** Dispositif selon la revendication 11, **caractérisé en ce que** le socle (10) peut être fixé au choix sur l'une ou l'autre face de la plaque de base (1).

**13.** Dispositif selon la revendication 11 ou la revendication 12, **caractérisé en ce qu'**une face de la plaque de base (1) est réalisée sensiblement de couleur blanche et l'autre face sensiblement de couleur noire.

**14.** Dispositif selon l'une des revendications précédentes, **caractérisé en ce qu'**il présente une référence de blanc physique qui est disposée sur le socle (10) ou sur la bascule (31).

**15.** Procédé de détermination des valeurs de coordonnées d'une position sélectionnée sur un modèle de mesure qui est mesuré au moyen d'un dispositif de mesure selon l'une des revendications précédentes, **caractérisé en ce qu'**un point de référence sur le deuxième bras de robot (30) est déplacé dans la position sélectionnée sur le modèle de mesure (2), **en ce que** les positions angulaires (g1, g2) correspondantes des deux bras de robot (20, 30) sont détectées et **en ce que** les coordonnées cartésiennes absolues du point de référence sont calculées à partir des positions angulaires.

**16.** Procédé selon la revendication 15, **caractérisé en ce que**, pour déplacer le point de référence, les deux bras de robot (20, 30) sont déplacés manuellement tandis que les moteurs d'entraînement (12, 25) sont hors tension.

**17.** Procédé selon la revendication 15, **caractérisé en ce que**, pour déplacer le point de référence, les deux bras de robot (20, 30) sont déplacés de manière motorisée, la motorisation étant commandée manuellement.

Fig. 1

Fig. 2

**Fig. 3**

Fig. 4